# EUROPEAN PATENT APPLICATION

(11) **EP 4 679 586 A1**
(43) Date of publication of application: **14.01.2026**
(21) Application number: 24913581.5
(22) Date of filing: 09.12.2024
(51) Int. Cl.: H01M 50/167, G01B 7/00, H01M 10/04

(54) **BEADING DEVICE FOR CYLINDRICAL BATTERY ADDITIONALLY INCLUDING POSITION MEASUREMENT DEVICE**

(30) Priority: 26.12.2023 KR 20230191764
(71) Applicant: LG ENERGY SOLUTION, LTD., Seoul 07335 (KR)
(72) Inventor: KIM, Seong Kyu, Daejeon 34122 (KR)
(74) Representative: Goddar, Heinz J.
(86) International application number: PCT/KR2024/020021
(87) International publication number: WO 2025/143638

(57) **Abstract**

Disclosed is a beading apparatus for cylindrical batteries including: an individual beading unit including a beading knife configured to form a beading portion on a side surface of a cylindrical can; a backup roller configured to support the cylindrical can on the other side surface of the cylindrical can when the beading knife forms the beading portion on the cylindrical can; and an upper CFB having a bearing structure and a lower CFB having a bearing structure respectively disposed above and below; a cam structure on which the individual beading unit is provided, wherein the cam structure includes one or more wherein the cam structure includes one or more individual beading units disposed in a circle, and the cam structure is configured to rotate the individual beading unit about a circular central axis; and a position measurement unit configured to measure a position of at least one of the beading knife, the backup roller, the upper CFB, or the lower CFB. A beading method for cylindrical batteries using the same, a cylindrical can beaded using the beading apparatus for cylindrical batteries, a cylindrical battery including the same, and an electrical apparatus and transportation means including the same may be provided.

## Description

### [Technical Field]

The present invention relates to a beading apparatus for cylindrical batteries with a position measurement unit. More particularly, the present invention relates to a beading apparatus for cylindrical batteries provided with a position measurement unit capable of measuring the positions of a beading knife, a backup roller, an upper cam, and a lower cam used when forming a beading portion on a cylindrical battery and a beading portion formation method for cylindrical batteries using the same.

### [Background Art]

A lithium secondary battery includes an electrode assembly in which a positive electrode coated with a positive electrode active material, a negative electrode coated with a negative electrode active material, and a separator located between the positive electrode and the negative electrode are stacked, the separator being configured to prevent short circuit and to allow migration of lithium ions (Li-ions), a battery case configured to receive the electrode assembly, and an electrolyte solution injected into the battery case to allow migration of lithium ions therethrough.

Depending on the shape of the battery case, the lithium secondary battery is classified as a cylindrical battery having an electrode assembly mounted in a cylindrical metal can, a prismatic battery having an electrode assembly mounted in a prismatic metal can, or a pouch-shaped battery having an electrode assembly mounted in a pouch-shaped case made of an aluminum laminate sheet. The cylindrical battery has the advantage of relatively high capacity and structural safety.

The cylindrical battery includes a cylindrical can, a jelly-roll electrode assembly received in the cylindrical can, a cap assembly coupled to an upper part of the cylindrical can, a beading portion configured to allow the cap assembly to be mounted thereon, and a crimping portion configured to seal the cylindrical battery. The cylindrical battery is manufactured by inserting a jelly-roll electrode assembly into a cylindrical can, forming a beading portion on the part of the can corresponding to an outer circumference of an upper end of the jelly-roll electrode assembly, installing a cap assembly with a gasket, and crimping and sizing an upper end of the can.

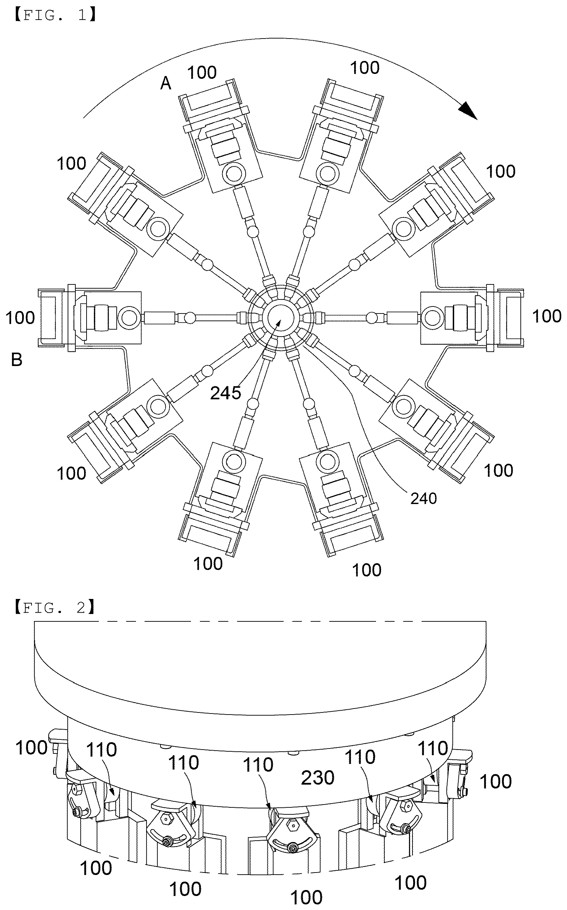

FIG. 1 is a top view of a conventional beading apparatus.

Referring to FIG. 1, the conventional beading apparatus is a cam structure on which ten individual beading units 100 are disposed in a circle and which rotates the individual beading units 100 about a circular central axis of the circle (a central axis of the cam structure) 245. Each individual beading unit 100 receives a cylindrical can having a jelly-roll electrode assembly received therein in an upright state from the preceding stage. In the preceding stage, an apparatus in which individual units rotate about another circular central axis, which is similar to the conventional beading apparatus, may be used. These two rotating apparatuses may engage with each other at one position, like gears engage with each other, to transfer a cylindrical battery completed by each apparatus to the next step. The preceding stage is omitted from FIG. 1.

In the conventional beading apparatus, each of the ten individual beading units 100 receives a cylindrical can in an upright state from the preceding stage at a specific position, e.g. position A in FIG. 1. Subsequently, the individual beading unit 100 fixes the received cylindrical can while rotating in a clockwise direction, a backup roller and a beading knife move vertically and horizontally to specific positions, the beading knife performs a beading operation, the backup roller and the beading knife return to the initial positions thereof, and the beading operation is completed, and the cylindrical can with the beading operation completed is transferred to the next process (position B), whereby one cycle is completed. All of the ten individual beading units 100 rotate about the circular central axis 245 to perform the same operation at specific positions.

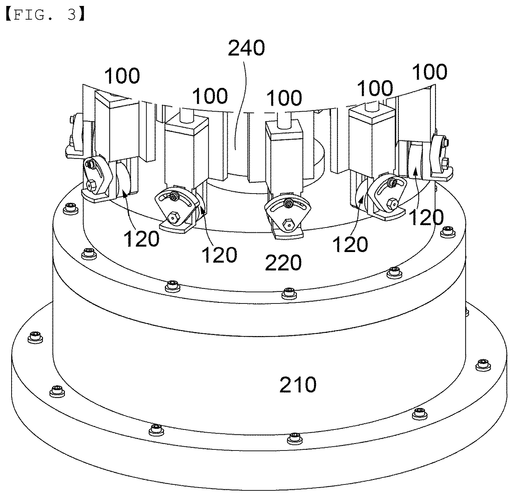

FIG. 2 is a perspective view showing a part of an upper part of the conventional beading apparatus, and FIG. 3 is a perspective view showing a part of a lower part of the conventional beading apparatus.

Referring to FIGs. 1 to 3, two bearings, i.e. an upper cam follower bearing (CFB) 110 and a lower CFB 120, of each of the individual beading units 100, rotate along outer peripheries of a lower cam plate 220, which is disposed on a cylindrical cam support portion 210, and an upper cam plate 230, which is disposed at an upper part of the entire beading apparatus. The upper CFB 110 is located at an upper part of the individual beading unit 100, and the lower CFB 120 is located at a lower part of the individual beading unit 100.

As the individual beading unit 100 is continuously rotated by the upper CFB 110 and the lower CFB 120, devices in the individual beading unit 100 move upward and downward to perform a beading operation on a cylindrical can. That is, the rotational motion of the two CFBs 110 and 120 is connected to the linear motion of the device in the individual beading unit 100, and the rotating apparatus like the conventional beading apparatus is commonly referred to as a cam apparatus or a cam structure.

The upper CFB 110 and the lower CFB 120 are moved to a constant height in tight contact along an upper surface of the lower cam plate 220 and a lower surface of the upper cam plate 230, which are horizontally disposed, respectively. If the upper surface of the lower cam plate 220 and the lower surface of the upper cam plate 230 are uneven or have foreign matter attached thereto, the upper CFB 110 and the lower CFB 120 may not rotate while maintaining a constant height. Also, if the bearings of the upper CFB 110 and the lower CFB 120 are abnormal, the upper CFB 110 and the lower CFB 120 may not rotate while maintaining a constant height. If the upper CFB 110 and the lower CFB 120 do not rotate while maintaining a constant height due to various causes, the device in the individual beading unit 100 may also not perform normal linear movement due to the cam movement, resulting in defective beading.

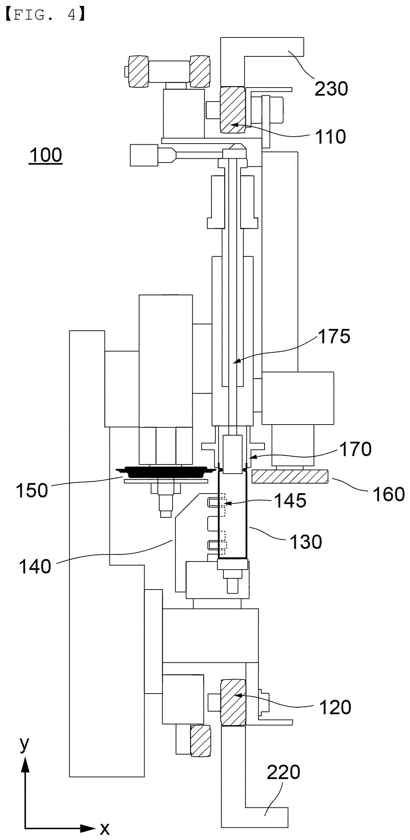

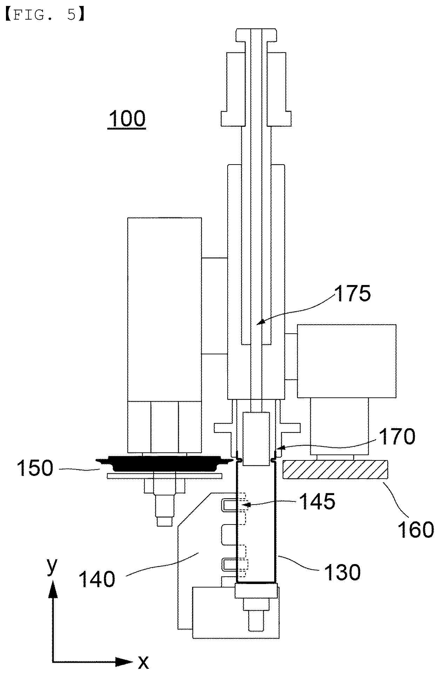

FIG. 4 is a sectional view showing the entirety of each individual beading unit 100 of the conventional beading apparatus, and FIG. 5 is a sectional view showing a part of each individual beading unit of the conventional beading apparatus. In FIGs. 2 and 3, the individual beading unit 100 is schematically shown, and therefore the individual beading unit 100 will be described with reference to the sectional views of FIGs. 4 and 5. Meanwhile, other devices are omitted from FIGs. 4 and 5 in order to describe only the parts related to the present invention.

The individual beading unit 100 includes a cylindrical battery, a cylindrical can support portion 140 configured to support a cylindrical can 130 having a jelly-roll electrode assembly received therein, which has not yet been substantially assembled, a beading knife 150 configured to form a beading portion on an upper part of the cylindrical can 130, and a backup roller 160 disposed symmetrically to the beading knife 150 based on the center of the cylindrical can 130.

A beading operation is a process of forcibly pressing and deforming a side surface of the cylindrical can 130 inwardly of the cylindrical can by the circular beading knife 150. While a lower part of the cylindrical can 130 is supported by the cylindrical can support portion 140, a rotating roller 145 of the cylindrical can support portion 140 rotates the cylindrical can 130. A beading portion is formed on the entirety of the side surface of the cylindrical can 130 in a rotating state by the beading knife 150, which is held at a constant height and depth. Here, the depth refers to the length by which the beading knife 150 penetrates the side surface of the cylindrical can 130 for the beading operation.

Although the cylindrical can 130 is rotating, the force is applied by the beading knife 150 from only one side, which may cause deformation of the cylindrical can 130. The cylindrical can support portion 140 supports only the lower part of the cylindrical can 130. The cylindrical can guide 170 only guides the upper part of the cylindrical can 130 and does not substantially fix the cylindrical can with great force. The cylindrical can guide 170 is provided with a suction portion 175 configured to suction metal powder generated during the beading operation, and cannot strongly fix the cylindrical can 130.

In order to prevent deformation of the cylindrical can 130 which may occur during the beading operation, the backup roller 160 is provided at the position symmetrical to the beading knife 150 based on the center of the cylindrical can 130. When the beading knife 150 forms a beading portion in contact with the cylindrical can 130, the backup roller 160 is also in contact with the cylindrical can 130 to support the cylindrical can 130.

As described above, the individual beading unit 100 fixes the received cylindrical can 130 while rotating in the clockwise direction, the backup roller 150 and the beading knife 160 move vertically and horizontally to specific positions, the beading knife 150 performs the beading operation, the backup roller 160 and the beading knife 150 return to the initial positions thereof, and the cylindrical can 130 with the beading operation completed is transferred to the next process, whereby one cycle is completed.

A cylindrical can newly received from the preceding stage is fixed to the cylindrical can support portion 140 in an upright state. Since the cylindrical can support portion 140 is coupled to the lower CFB 120, which rotates at a constant height, the cylindrical can support portion also rotates at a constant height. The rotational movement mentioned here is a rotational movement along the outer periphery of the lower cam plate 220.

As the individual beading unit 100 rotates in the clockwise direction, the beading knife 150 and the backup roller 160 approach the cylindrical can 130 while moving downward. When the beading operation is completed, the beading knife 150 and the backup roller 160 move upward while moving away from the cylindrical can 130. In relative coordinates based on the cylindrical can 130, the beading knife 150 and the backup roller 160 move upward and downward along a y axis while moving along an x axis to approach or move away from the cylindrical can 130. The cylindrical can guide 170 moves upward and downward along the y axis.

Typically, the beading portion provided on the cylindrical can 130 has a depth of 2 mm to 2.5 mm, and the beading operation is performed in a very short time. The beading knife 150 and the backup roller 160 move along the x axis and the y axis in conjunction with the rotational movement of the upper CFB 110 by cam movement. The associated operation of the beading knife 150, the backup roller 160, the cylindrical can support portion 140, and the cylindrical can guide 170 may be modified depending on the cam movement, but this may be easily designed and modified by a person having ordinary skill in the art, and the configuration thereof is not an essential part of the present invention, and therefore a detailed description thereof will be omitted.

In the conventional beading apparatus, the individual beading unit 100 is problematic for the following reasons.

1) The upper CFB 110 and the lower CFB 120 must rotate while maintaining a constant height, otherwise the positions of the cylindrical can support portion 140, the beading knife 150, and the backup roller 160 may be changed by the cam movement.

2) Even if the cam movement is performed normally, beading defects may occur if the positions of the beading knife 150 and the backup roller 160 disposed in the individual beading unit 100 are not normal.

The positions of the beading knife 150 and the backup roller 160 are of utmost importance for the beading operation of the cylindrical can 130 to proceed normally. The height from the lower part of the cylindrical can 130 (y-axis position) and the distance from the central axis of the cylindrical can 130 (x axis) are very important.

In the conventional beading apparatus, the positions of the upper CFB 110, the lower CFB 120, the beading knife 150, and the backup roller 160, which are the most important elements that may cause defective beading, are not measured separately, but the operation is performed by mechanical configuration, or regular/irregular observation is manually performed by an operator.

The beading operation is very quickly performed, and therefore the number of cylindrical cans 130 produced is very high. Real-time observation of the most important elements that can lead to beading defects is a very important factor in reducing beading defects, which is overlooked conventionally.

Furthermore, since ten individual beading units 100 of the same shape are operated simultaneously, abnormal operation of any one thereof may cause continuous and repeated defects, but it is very difficult to determine the specific unit that is abnormal in the current configuration. For this reason, many defects occur in beading operations in practice.

Patent Documents 1 to 3, 5, and 6 each disclose a jig for fixing a cylindrical battery, a beading knife for beading, or a backup roller. However, these patent documents do not seem to recognize the problem of defects due to the positions of a CFB, the beading knife, and the backup roller, and therefore do not disclose sensors that measure the positions of the CFB, the beading knife, and the backup roller.

Patent Document 4 relates to technology for preventing horizontal deviation during beading, but neither recognizes the problems associated with the x-axis and y-axis positions of a beading knife nor discloses a configuration to solve the same.

Patent Document 7, which relates to a caulking machine for manufacturing ball joints, discloses a sensor means for detecting the position of a press-fit assembly that presses a cap, but there appears to be no motivation to apply the same to beading of a cylindrical can.

As such, the prior art documents fail to recognize the problems associated with the positions of an upper CFB, a lower CFB, a beading knife, and a backup roller, which are critical factors in a beading apparatus for cylindrical batteries, and lack means capable of identifying or measuring the same.

Korean Patent Application Publication No. 2022-0033187 ("Patent Document 1")

Japanese Registered Patent Publication No. 4989962

### ("Patent Document 2")

Korean Registered Patent Publication No. 1050314

### ("Patent Document 3")

Korean Registered Patent Publication No. 1345340

### ("Patent Document 4")

Japanese Patent Application Publication No. 1997-035693 ("Patent Document 5")

Japanese Patent Application Publication No. 2007-123224 ("Patent Document 6")

Korean Utility Model Application Publication No. 2012-0004056 ("Patent Document 7")

### [Disclosure]

### [Technical Problem]

The present invention has been made in view of the above problems, and it is an object of the present invention to provide a means capable of identifying or measuring the positions of an upper CFB, a lower CFB, a beading knife, and a backup roller, which are important factors in a beading apparatus for cylindrical batteries.

### [Technical Solution]

In order to accomplish the above object, the present invention provides a beading apparatus for cylindrical batteries including: an individual beading unit including a beading knife configured to form a beading portion on a side surface of a cylindrical can; a backup roller configured to support the cylindrical can on the other side surface of the cylindrical can when the beading knife forms the beading portion on the cylindrical can; and an upper CFB having a bearing structure and a lower CFB having a bearing structure respectively disposed above and below; a cam structure on which the individual beading unit is provided, wherein the cam structure includes one or more individual beading units disposed in a circle, and the cam structure is configured to rotate the individual beading unit about a circular central axis; and a position measurement unit configured to measure the position of at least one of the beading knife, the backup roller, the upper CFB, or the lower CFB.

The position measurement unit may include at least one of a first position measurement portion configured to measure at least one of: a first height from the beading knife to the cylindrical can and a first distance from the beading knife to the cylindrical can; a second position measurement portion configured to measure at least one of a second height from the backup roller to the cylindrical can and a second distance from the backup roller to the cylindrical can; a third position measurement portion configured to measure a third distance from the upper CFB to an upper cam plate; or a fourth position measurement portion configured to measure a fourth distance from the lower CFB to a lower cam plate.

The first position measurement portion to the fourth position measurement portion may be fixed at specific positions without rotation.

Each of the first height and the second height may be the height based on a specific point of the cylindrical can, each of the first distance and the second distance may be the distance based on a central axis of the cylindrical can, the third distance may be the distance from a central axis of the bearing of the upper CFB to a lower surface of the upper cam plate, and the fourth distance may be the distance from a central axis of the bearing of the lower CFB to an upper surface of the lower cam plate.

The cam structure may include a cam support portion in a form of a cylinder, wherein the lower cam plate is disposed on the cam support portion, an upper surface of the lower cam plate being in a form of a circular or doughnut-shaped plate, wherein the upper cam plate is disposed at an upper part of the cam structure, a lower surface of the upper cam plate being in a form of a circular or doughnut-shaped plate, and a central support portion disposed in the center of the cam support portion, the central support portion being configured to support the upper cam plate.

The one or more individual beading units may be disposed in a circle along an outer periphery of each of the upper cam plate and the lower cam plate so as to rotate about the circular central axis, the upper CFB of each of the individual beading units may be in tight contact with the lower surface of the upper cam plate so as to be rotatable along the outer periphery of the upper cam plate about the circular central axis, and the lower CFB of each of the individual beading units may be in tight contact with the upper surface of the lower cam plate so as to be rotatable along the outer periphery of the lower cam plate about the circular central axis.

When the individual beading unit rotates about the circular central axis, at a same specific position, i) a process of receiving a cylindrical can in an upright state from the preceding stage, ii) a process of moving the beading knife and the backup roller to positions for beading, iii) a process of the beading knife forming a beading portion on the cylindrical can, iv) a process of returning the beading knife and the backup roller to the initial positions thereof, and v) a process of transferring the cylindrical can, after completion of a beading operation, to the next process may be performed.

When the beading knife forms the beading portion on the cylindrical can, the backup roller may be located at a position symmetrical to the beading knife based on a central axis of the cylindrical can.

A cylindrical can support portion configured to support a lower part of the cylindrical can and a cylindrical can guide configured to guide an upper part of the cylindrical can may be added to the individual beading unit.

The first position measurement portion and the second position measurement portion may be fixed by separate support portions, the third position measurement portion may be fixed to a side surface of the upper cam plate, and the fourth position measurement portion may be fixed to a side surface of the lower cam plate. At this time, sensors of the third position measurement portion and the fourth position measurement portion may measure the positions of separate measurement dogs coupled respectively to a central axis of the bearing of the upper CFB and a central axis of the bearing of the lower CFB.

In addition, the present invention provides a beading method for cylindrical batteries using the beading apparatus. Specifically, the beading method for cylindrical batteries may include i) a process of receiving a cylindrical can in an upright state from the preceding stage, ii) a process of moving the beading knife and the backup roller to positions for beading, iii) a process of the beading knife forming a beading portion on the cylindrical can, iv) a process of returning the beading knife and the backup roller to the initial positions thereof, and v) a process of transferring the cylindrical can, after completion of a beading operation, to the next process. Meanwhile, for each individual beading unit, the measurement results of the position measurement unit may be determined to check or monitor defects.

In addition, the present invention provides a cylindrical can beaded using the beading apparatus for cylindrical batteries, a cylindrical battery including the same, and an electrical apparatus and transportation means including the same.

In addition, the present invention may provide arbitrary combinations of the above solving means.

### [Advantageous Effects]

The present invention is capable of providing a beading apparatus for cylindrical batteries, the beading apparatus including an individual beading unit including a beading knife configured to form a beading portion on a side surface of a cylindrical can, a backup roller configured to support the cylindrical can on the other side surface of the cylindrical can when the beading knife forms the beading portion on the cylindrical can, and an upper CFB having a bearing structure and a lower CFB having a bearing structure respectively disposed above and below, and a cam structure on which the individual beading unit is provided in one or more and is disposed in a circle, the cam structure being configured to rotate the individual beading unit about a circular central axis, wherein a position measurement unit configured to measure a position of at least one of the beading knife, the backup roller, the upper CFB, and the lower CFB is added, a beading method for cylindrical batteries using the same, a cylindrical can beaded using the beading apparatus for cylindrical batteries, a cylindrical battery including the same, and an electrical apparatus and transportation means including the same.

The present invention is capable of identifying or measuring the positions of the upper CFB, the lower CFB, the beading knife, and the backup roller, which are important factors in the beading apparatus for cylindrical batteries, whereby it is possible to greatly reduce defects in the beading operation.

Furthermore, it is possible to easily specify an individual beading unit in which defects occur, whereby it is also possible to easily remedy the same.

The present invention is also effective in improving the quality of cam-type repetitive work, and is currently applied to many processes to improve the efficiency of the processes.

### [Description of Drawings]

FIG. 1 is a top view showing a conventional beading apparatus.
FIG. 2 is a perspective view showing a part of an upper part of the conventional beading apparatus.
FIG. 3 is a perspective view showing a part of a lower part of the conventional beading apparatus.
FIG. 4 is a sectional view showing the entirety of each individual beading unit of the conventional beading apparatus.
FIG. 5 is a sectional view showing a part of each individual beading unit of the conventional beading apparatus.
FIG. 6 is a top view showing a beading apparatus according to the present invention.
FIG. 7 is a perspective view showing a part of an upper part of the beading apparatus according to the present invention.
FIG. 8 is a perspective view showing a part of a lower part of the beading apparatus according to the present invention.
FIG. 9 is a sectional view showing a beading knife of each individual beading unit of the beading apparatus according to the present invention and a horizontal position measurement portion therefor.
FIG. 10 is a sectional view showing the beading knife of each individual beading unit of the beading apparatus according to the present invention and a vertical position measurement portion therefor.
FIG. 11 is a sectional view showing a backup roller of each individual beading unit of the beading apparatus according to the present invention and a position measurement portion therefor.
FIG. 12 is a sectional view showing the entirety of each individual beading unit of the beading apparatus according to the present invention.

### [Best Mode]

In the present application, it should be understood that the terms "comprises," "has," "includes," etc., when used in this specification, specify the presence of stated features, numbers, steps, operations, components, parts, or combinations thereof, but do not preclude the presence or addition of one or more other features, numbers, steps, operations, components, parts, or combinations thereof.

It will be understood that, when a component is referred to as being "connected to" or "coupled to" another component, it may be directly connected to or coupled to the other component, or intervening components may be present. In contrast, when a component is referred to as being "directly connected to" or "directly coupled to" another component, there are no intervening components present. Other terms that describe the relationship between components, such as "between" and "directly between" or "adjacent to" and "directly adjacent to", must be interpreted in the same manner.

In addition, unless otherwise defined, all terms, including technical and scientific terms, used in this specification have the same meanings as those commonly understood by a person having ordinary skill in the art to which the present invention pertains. It will be further understood that terms, such as those defined in commonly used dictionaries, should be interpreted as having meanings consistent with their meanings in the context of the relevant art and the present disclosure, and are not to be interpreted in an idealized or overly formal sense unless expressly so defined herein.

Hereinafter, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

In addition, all numeric ranges include the lowest value, the highest value, and all intermediate values therebetween unless the context clearly indicates otherwise.

Embodiments of the present invention will be described in detail with reference to the drawings. A beading apparatus according to the present invention is identical or similar to the conventional beading apparatus, except for the addition of a position measurement unit 300, and therefore a description of duplicate parts will be omitted.

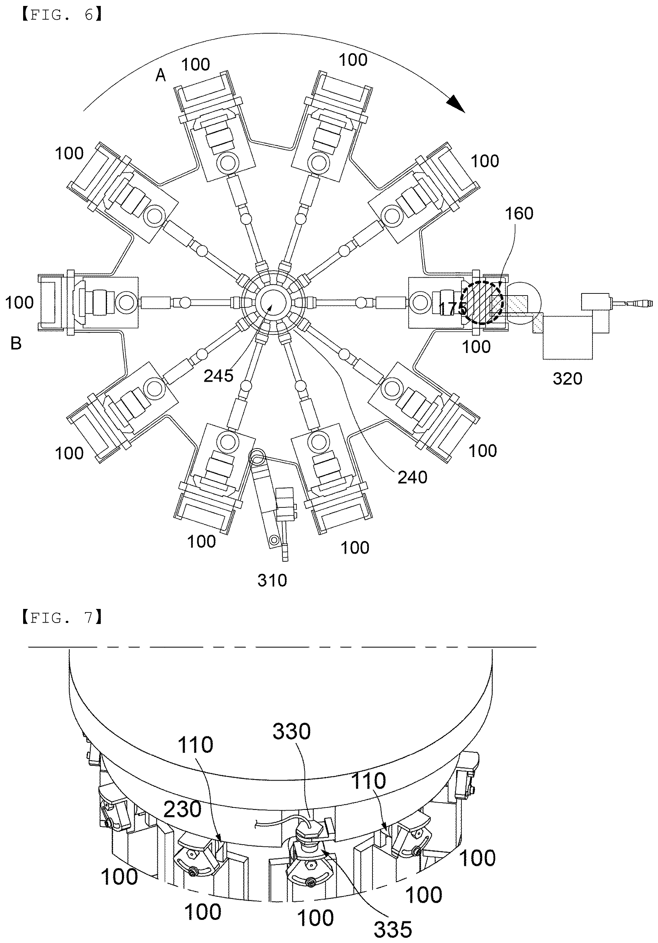

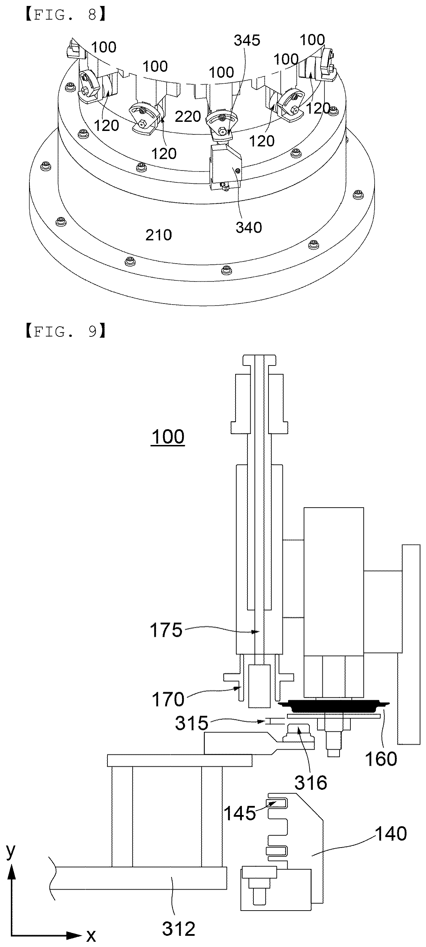

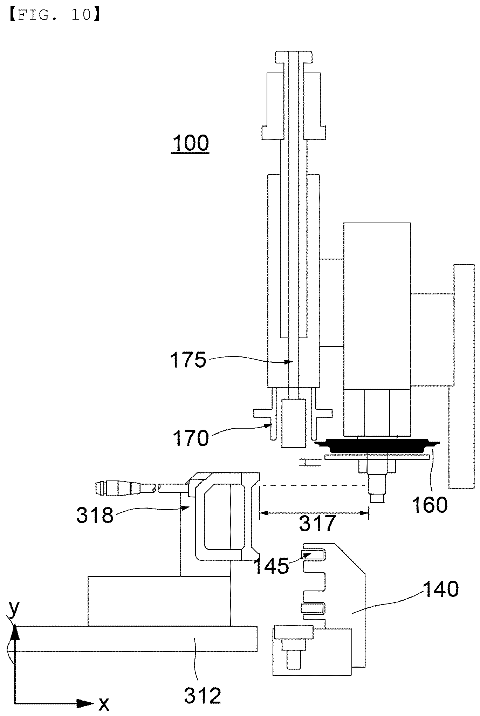

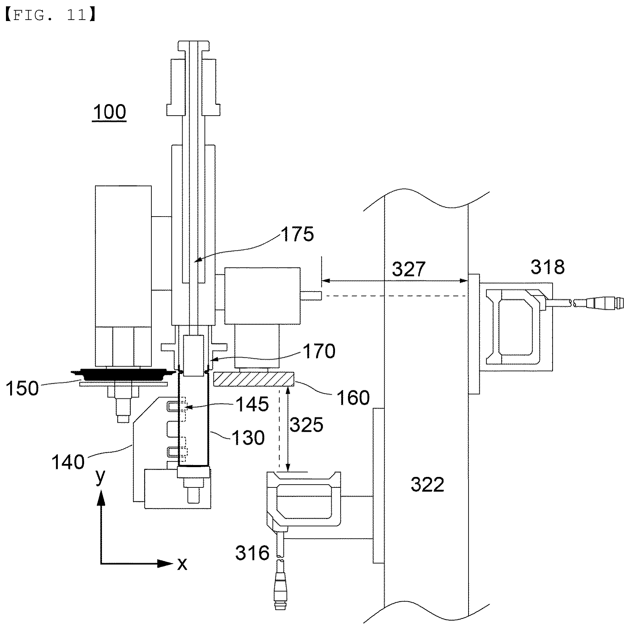

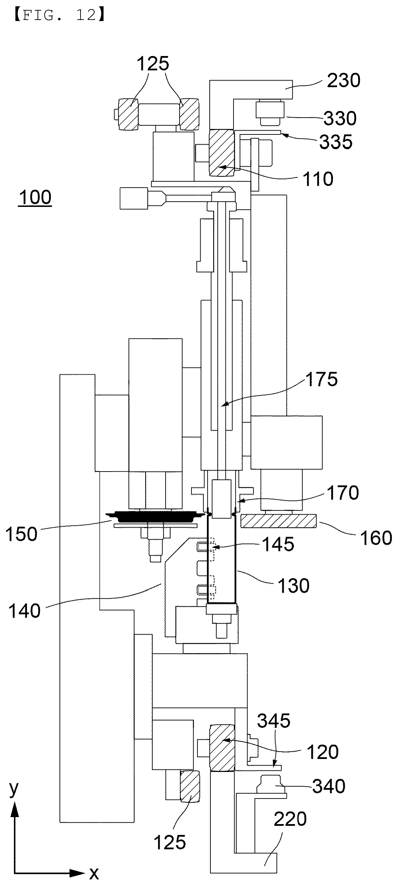

FIG. 6 is a top view showing a beading apparatus according to the present invention, FIG. 7 is a perspective view showing a part of an upper part of the beading apparatus according to the present invention, FIG. 8 is a perspective view showing a part of a lower part of the beading apparatus according to the present invention, FIG. 9 and FIG. 10 are sectional views showing a beading knife of each individual beading unit of the beading apparatus according to the present invention and a measurement portion therefor, FIG. 11 is a sectional view showing a backup roller of each individual beading unit of the beading apparatus according to the present invention and a position measurement portion therefor, and FIG. 12 is a sectional view showing the entirety of each individual beading unit of the beading apparatus according to the present invention.

Referring to FIGs. 6 to 12, the present invention provides a beading apparatus for cylindrical batteries, the beading apparatus including an individual beading unit 100 including a beading knife 150 configured to form a beading portion on a side surface of a cylindrical can 130, a backup roller 160 configured to support the cylindrical can 130 on the other side surface of the cylindrical can 130 when the beading knife 150 forms the beading portion on the cylindrical can 130, and an upper CFB 110 having a bearing structure and a lower CFB 120 having a bearing structure respectively disposed above and below, and a cam structure 200 on which the individual beading unit 100 is provided in one or more and is disposed in a circle, the cam structure being configured to rotate the individual beading unit 100 about a circular central axis 245, wherein a position measurement unit 300 configured to measure the position of at least one of the beading knife 150, the backup roller 160, the upper CFB 110, and the lower CFB 120 is added.

In addition to the upper CFB 110 and the lower CFB 120, each individual beading unit 100 may include additional bearings 115 and 225 configured to support each individual beading unit 100. Any device including a sensor configured to measure the distance may be used as the position measurement unit 300, and a laser sensor or an eddy current sensor may be included. In addition, the position measurement unit may be a sensor using a physical tip. A separate measurement dog, the position of which can be detected by the sensor, may be attached to an individual measurement position, and the sensor may measure the position of the measurement dog. In addition, the value measured by the sensor may be digitized and transmitted.

The position measurement unit 300 may include a first position measurement portion 310 configured to measure a first height 315 from the beading knife 150 to the cylindrical can 130 and to measure a first distance 317 from the beading knife 150 to the cylindrical can 130, a second position measurement portion 320 configured to measure a second height 325 from the backup roller 160 to the cylindrical can 130 and to measure a second distance 327 from the backup roller 160 to the cylindrical can 130, a third position measurement portion 330 configured to measure a third height from the upper CFB 110 to an upper cam plate 230, and a fourth position measurement portion 340 configured to measure a fourth height from the lower CFB 120 to a lower cam plate 220.

Specifically, each of the first height 315 and the second height 325 is the height based on a specific point of the cylindrical can 130, each of the first distance 317 and the second distance 327 is the distance based on a central axis of the cylindrical can 130, the third height is the distance from a central axis of the bearing of the upper CFB 110 to a lower surface of the upper cam plate 230, and the fourth height is the distance from a central axis of the bearing of the lower CFB 120 to an upper surface of the lower cam plate 220.

During a beading operation, the beading portion is formed on the entirety of the side surface of the cylindrical can 130 in a rotating state by the beading knife 150, which is held at a constant height and depth. In all individual beading units 100, the physical size of the beading knife 150 is the same, wherein the first distance 317 determines the depth, which is the length by which the beading knife 150 penetrates the side surface of the cylindrical can 130 for the beading operation, and the first height 317 determines the height at which the beading portion is to be formed on the cylindrical can 130.

The first height 315, the first distance 317, the second height 325, and the second distance 327 are substantially distances measured based on separate support portions 312 and 333, but the position of a cylindrical can support portion 140 relative to the individual beading unit 100 is fixed, and therefore conversion to the distance based on the cylindrical can 130 may be possible based thereon.

The first position measurement portion 310 to the fourth position measurement portion 340 are fixed at specific positions without rotation even during the beading operation. Referring to FIG. 6, the first position measurement portion 310 is disposed at 6 o'clock based on the position of the individual beading unit 100 in the beading apparatus for cylindrical batteries, and the second position measurement portion 320 is disposed at 3 o'clock. The first position measurement portion 310 and the second position measurement portion 320 are fixed by the separate support portions 312 and 333.

The first position measurement portion 310 and the second position measurement portion 320 are installed at the positions to which the beading knife 150 and the backup roller 160 are moved in order to perform beading. Substantially, the positions are the position after beading is performed and the position before beading is performed, but the positions of the beading knife 150 and the backup roller 160 are still unchanged from the position at which beading is performed, whereby it is possible to obtain a desired measurement result. Considering this, it can be understood that the positions of the first position measurement portion 310 and the second position measurement portion 320 are not limited to the current positions and that the first position measurement portion and the second position measurement portion can be disposed anywhere as long as the positions of the beading knife 150 and the backup roller 160 are the same as the positions at which beading is performed.

Each of the first position measurement portion 310 and the second position measurement portion 320 includes a horizontal sensor 318 configured to measure a horizontal (x-axis) distance and a vertical sensor 316 configured to measure a vertical (y-axis) distance. The vertical sensor 316 of FIG. 9 is an eddy current sensor, and both the horizontal sensor 318 and the vertical sensor 316 of FIGs. 10 and 11 are laser sensors. Specifically, the eddy current sensor of FIG. 9 measures the position of a lower surface of the beading knife 150, and the horizontal sensor 318 of FIG. 10 measures the position of the rotational axis of the beading knife 150. The vertical sensor 316 of FIG. 11 measures the position of a lower surface of the backup roller 150, and the horizontal sensor 318 of FIG. 11 measures the position of a separate measurement dog. However, relative values may be measured, and therefore it is possible to determine the position relative to the cylindrical can 130 therethrough.

The sensors of the third position measurement portion 330 and the fourth position measurement portion 340 are eddy current sensors. The types of the sensors of the first position measurement portion 310 to the fourth position measurement portion 340 are not limited, and any other sensors configured to measure the distance or the position may be used.

Referring to FIGs. 7 and 8, the third position measurement portion 330 is fixed to a side surface of the upper cam plate 230, and the fourth position measurement portion 340 is fixed to a side surface of the lower cam plate 220. The sensors of the third position measurement portion 330 and the fourth position measurement portion 340 measure positions of separate measurement dogs 335 and 345 coupled respectively to the central axis of the bearing of the upper CFB 110 and the central axis of the bearing of the lower CFB 120.

The cam structure 200 includes a cam support portion 210 in the form of a cylinder, a lower cam plate 220 disposed on the cam support portion 210, an upper surface of the lower cam plate being in the form of a circular or doughnut-shaped plate, an upper cam plate 230 disposed at an upper part of the cam structure 200, a lower surface of the upper cam plate being in the form of a circular or doughnut-shaped plate, and a central support portion 240 disposed in the center of the cam support portion 210, the central support portion being configured to support the upper cam plate 230.

The individual beading units 100 are disposed in a circle along outer peripheries of the upper cam plate 230 and the lower cam plate 220 so as to rotate about the circular central axis 245, the upper CFB 110 of each of the individual beading units 100 is in tight contact with the lower surface of the upper cam plate 230 so as to be rotatable along the outer periphery of the upper cam plate 230 about the circular central axis 245, and the lower CFB 120 of each of the individual beading units 100 is in tight contact with the upper surface of the lower cam plate 220 so as to be rotatable along the outer periphery of the lower cam plate 220 about the circular central axis 245.

The individual beading units 100 disposed in a circle rotate about the circular central axis 245 due to the rotational motion of the upper CFB 110 and the lower CFB 120 of each of the individual beading units 100. Individual coupling shafts (not shown) substantially protruding from the central support portion 240 are coupled to the individual beading units 100 to generate the rotational motion.

When the individual beading unit 100 rotates about the circular central axis 245, at the same specific position, i) a process of receiving a cylindrical can in an upright state from the preceding stage, ii) a process of moving the beading knife 150 and the backup roller 160 to the positions for beading, iii) a process of the beading knife 150 forming a beading portion on the cylindrical can 130, iv) a process of returning the beading knife 150 and the backup roller 160 to the initial positions thereof, and v) a process of transferring the cylindrical can 130 with the beading operation completed to the next process may be performed.

When the beading knife 150 forms the beading portion on the cylindrical can 130, the backup roller 160 may be located at the position symmetrical to the beading knife 150 based on a central axis of the cylindrical can 130.

Since the beading knife 150 is required to press the side surface of the cylindrical can 130 inwardly of the cylindrical can in order to deform the side surface of the cylindrical can, the beading knife is made of a metal having higher strength than the cylindrical can 130, whereas the backup roller 150 is configured to support the cylindrical can 130, and therefore it is preferable for the backup roller to be made of a metal having lower strength than the cylindrical can 130. In the case of a cylindrical can made of nickel-plated steel, it is preferable for the backup roller to be made of brass, which has lower strength than nickel-plated steel.

A cylindrical can support portion 140 configured to support a lower part of the cylindrical can 130, and a cylindrical can guide 170 configured to guide an upper part of the cylindrical can 130 may be added to each of the individual beading units 100.

The cylindrical can support portion 140 includes a rotating roller 145 configured to rotate the cylindrical can 130 while supporting the lower part of the cylindrical can 130. The cylindrical can support portion 140 is coupled to and moves with the lower CFB 120. The cylindrical can guide 170 is provided with a suction portion 175 configured to suction metal powder generated during the beading operation.

In addition, the present invention provides a beading method for cylindrical batteries using the beading apparatus for cylindrical batteries 130. Specifically, the beading method for cylindrical batteries 130 includes i) a process of receiving a cylindrical can in an upright state from the preceding stage, ii) a process of moving the beading knife 150 and the backup roller 160 to the positions for beading, iii) a process of the beading knife 150 forming a beading portion on the cylindrical can 130, iv) a process of returning the beading knife 150 and the backup roller 160 to the initial positions thereof, and v) a process of transferring the cylindrical can 130 with the beading operation completed to the next process. Meanwhile, for each individual beading unit 100, the measurement results of the position measurement unit 130 may be determined to check or monitor defects.

Those skilled in the art to which the present invention pertains will appreciate that various applications and modifications are possible within the category of the present invention based on the above description.

### (Description of Reference Numerals)

100: Individual beading unit
110: Upper CFB
115, 125: Additional bearings
120: Lower CFB
130: Cylindrical can
140: Cylindrical can support portion
145: Rotating roller
150: Beading knife
160: Backup roller
170: Cylindrical can guide
175: Suction portion
200: Cam structure (210 to 245)
210: Cam support portion
220: Lower cam plate
230: Upper cam plate
240: Central support portion
245: Circular central axis (central axis of cam structure)
300: Position measurement unit (310, 320, 330, 340)
310: First position measurement portion
312, 322: Separate support portions
315: First height
316: Vertical sensor
317: First distance
318: Horizontal sensor
320: Second position measurement portion
325: Second height
327: Second distance
330: Third position measurement portion
335, 345: Measurement dogs
340: Fourth position measurement portion

## Claims

1. A beading apparatus for cylindrical batteries, comprising:
an individual beading unit comprising:
a beading knife configured to form a beading portion on a side surface of a cylindrical can;
a backup roller configured to support the cylindrical can on the other side surface of the cylindrical can when the beading knife forms the beading portion on the cylindrical can; and
an upper CFB having a bearing structure and a lower CFB having a bearing structure respectively disposed above and below;
a cam structure on which the individual beading unit is provided, wherein the cam structure includes one or more individual beading units disposed in a circle, and the cam structure is configured to rotate the individual beading unit about a circular central axis; and
a position measurement unit configured to measure a position of at least one of the beading knife, the backup roller, the upper CFB, or the lower CFB.

2. The beading apparatus according to claim 1, wherein the position measurement unit comprises at least one of:
a first position measurement portion configured to measure at least one of a first height from the beading knife to the cylindrical can and a first distance from the beading knife to the cylindrical can;
a second position measurement portion configured to measure at least one of a second height from the backup roller to the cylindrical can and a second distance from the backup roller to the cylindrical can;
a third position measurement portion configured to measure a third distance from the upper CFB to an upper cam plate; or
a fourth position measurement portion configured to measure a fourth distance from the lower CFB to a lower cam plate.

3. The beading apparatus according to claim 2, wherein the first position measurement portion to the fourth position measurement portion are fixed at specific positions without rotation.

4. The beading apparatus according to claim 2, wherein
each of the first height and the second height is a height based on a specific point of the cylindrical can,
each of the first distance and the second distance is a distance based on a central axis of the cylindrical can,
the third distance is a distance from a central axis of the bearing of the upper CFB to a lower surface of the upper cam plate, and
the fourth distance is a distance from a central axis of the bearing of the lower CFB to an upper surface of the lower cam plate.

5. The beading apparatus according to claim 2, wherein the cam structure comprises:
a cam support portion in a form of a cylinder,
wherein the lower cam plate is disposed on the cam support portion, an upper surface of the lower cam plate being in a form of a circular or doughnut-shaped plate,
wherein the upper cam plate is disposed at an upper part of the cam structure, a lower surface of the upper cam plate being in a form of a circular or doughnut-shaped plate; and
a central support portion disposed in a center of the cam support portion, the central support portion being configured to support the upper cam plate.

6. The beading apparatus according to claim 5, wherein
the one or more individual beading units are disposed in a circle along an outer periphery of each of the upper cam plate and the lower cam plate so as to rotate about the circular central axis,
the upper CFB of each of the individual beading units is in tight contact with the lower surface of the upper cam plate so as to be rotatable along the outer periphery of the upper cam plate about the circular central axis, and
the lower CFB of each of the individual beading units is in tight contact with the upper surface of the lower cam plate so as to be rotatable along the outer periphery of the lower cam plate about the circular central axis.

7. The beading apparatus according to claim 1, wherein, when the individual beading unit rotates about the circular central axis, at a same specific position,
i) a process of receiving a cylindrical can in an upright state from a preceding stage;
ii) a process of moving the beading knife and the backup roller to positions for beading;
iii) a process of the beading knife forming a beading portion on the cylindrical can;
iv) a process of returning the beading knife and the backup roller to initial positions thereof; and
v) a process of transferring the cylindrical can, after completion of a beading operation, to a subsequent process are performed.

8. The beading apparatus according to claim 1, wherein, when the beading knife forms the beading portion on the cylindrical can, the backup roller is located at a position symmetrical to the beading knife based on a central axis of the cylindrical can.

9. The beading apparatus according to claim 1, wherein
a cylindrical can support portion configured to support a lower part of the cylindrical can; and
a cylindrical can guide configured to guide an upper part of the cylindrical can
are added to the individual beading unit.

10. The beading apparatus according to claim 5, wherein
the first position measurement portion and the second position measurement portion are fixed by separate support portions,
the third position measurement portion is fixed to a side surface of the upper cam plate, and
the fourth position measurement portion is fixed to a side surface of the lower cam plate.

11. The beading apparatus according to claim 10, wherein sensors of the third position measurement portion and the fourth position measurement portion measure positions of separate measurement dogs coupled respectively to a central axis of the bearing of the upper CFB and a central axis of the bearing of the lower CFB.

12. A beading method for cylindrical batteries using the beading apparatus according to any one of claims 1 to 11.

13. The beading method according to claim 12, wherein, for the individual beading unit, measurement results of the position measurement unit are determined to check defects.

14. A cylindrical battery beaded using the beading apparatus according to any one of claims 1 to 11.
